# EUROPÄISCHE PATENTSCHRIFT

(11) **EP 3 918 173 B1**
(45) Veröffentlichungstag und Bekanntmachung des Hinweises auf die Patenterteilung: **08.03.2023**
(21) Anmeldenummer: 20701053.9
(22) Anmeldetag: 21.01.2020
(51) Int. Cl.: E06B 3/66, E06B 3/54

(54) **FASSADENVERGLASUNG UND ISOLIERVERGLASUNGSEINHEIT**
FACADE GLAZING AND INSULATING GLAZING UNIT
VITRAGE DE FAÇADE ET UNITÉ DE VITRAGE ISOLANT

(30) Priorität: 29.01.2019 EP 19154160
(43) Veröffentlichungstag der Anmeldung: 08.12.2021
(73) Patentinhaber: Saint-Gobain Glass France, 92400 Courbevoie (FR)
(72) Erfinder: DRÖGE, Alicia, 52134 Herzogenrath (DE); HOLTSTIEGE, Thomas, 58332 Schwelm (DE); MARJAN, Christopher, 52072 Aachen (DE); EFFERTZ, Christian, 52080 Aachen (DE)
(74) Vertreter: Obermair, Christian Egbert
(86) Internationale Anmeldenummer: PCT/EP2020/051340
(87) Internationale Veröffentlichungsnummer: WO 2020/156871

(56) Entgegenhaltungen:
- WO-A1-2007/137719
- DE-A1- 19 814 620

## Beschreibung

Die Erfindung betrifft eine Fassadenverglasung mit einem metallischen Rahmen und einer in den Rahmen eingesetzten Isolierverglasungseinheit, die mindestens zwei Glasscheiben und ein zwischen diesen nahe deren Kanten umlaufendes Abstandshalter- und Dichtprofil aufweist, wobei an der Isolierverglasungseinheit mindestens ein RFID-Transponder als Identifikationselement angebracht ist und wobei der Rahmen die Kanten der Isolierverglasungseinheit umgreift und zugleich den oder die Transponder überdeckt.

Moderne Fenster, Türen und Fassadenverglasungen, zumindest für den Einsatz in nördlichen und gemäßigten Breiten, werden üblicherweise unter Einsatz vorgefertigter Isolierverglasungseinheiten (IGU) hergestellt, die den oben erwähnten Aufbau haben, gegebenenfalls aber auch mehr als zwei Glasschreiben im Verbund umfassen können. Derartige Isolierverglasungseinheiten stellen massenhaft hergestellte, versandte und auch eigenständig gehandelte Produkte dar, die auf ihrem Weg bis in ein Endprodukt und gegebenenfalls auch noch bei dessen Wartung und Instandhaltung eindeutig identifizierbar sein sollten.

Es ist bereits bekannt, Isolierverglasungseinheiten mit identifizierenden Kennzeichnungen zu versehen, und in der entsprechenden Praxis haben sich gewisse Anforderungen der Hersteller und Anwender ergeben:
- Die identifizierende Markierung sollte sowohl von der Innen- als auch der Außenseite des fertigen Fensters, der Tür oder der Fassade her unsichtbar sein.
- Die Kennzeichnung sollte aus einem Abstand zwischen 30 cm und 1 m "lesbar" sein, bevorzugt von mindestens 50 cm Abstand.
- Die Kennzeichnung sollte weitestgehend fälschungssicher sein, also nicht ohne Weiteres überschrieben oder kopiert werden können.

Die Wirksamkeit herkömmlicher identifizierender Markierungen, wie etwa Barcodes und QR-Codes, basiert auf deren Sichtbarkeit, was für Isolierverglasungseinheiten zumindest eine Einschränkung unter obigem erstem Aspekt bedeutet. Auch die Erfüllung der zweiten Anforderung gestaltet sich damit schwierig. Der Schutz vor dem Kopieren kann nicht gewährleistet werden, da Barcodes und QR-Codes abfotografiert werden können.

Es wurde auch vorgeschlagen, Isolierverglasungseinheiten mit "elektronischen" Kennzeichen, insbesondere über Funk auslesbaren Identifikatoren, sogenannten RFID-Transpondern, zu versehen. Derartige Isolierverglasungseinheiten sind beispielsweise offenbart in der WO 00/36261 A1 oder der WO 2007/137719 A1.

Ein solcher RFID Transponder kann mit einem Passwort geschützt werden, so dass er nicht ohne erheblichen Aufwand überschrieben oder seine Funkfähigkeit zerstört werden kann.

Bestimmte Typen von Fenster- und Türrahmen, insbesondere aber Fassadenkonstruktionen, in denen Isolierverglasungseinheiten verbaut werden, bestehen überwiegend oder mindestens teilweise aus einem Metall (Aluminium, Stahl...), welches den Durchgang von Funkwellen vom oder zum RFID-Transponder an der Isolierverglasungseinheit unterbricht oder zumindest stark dämpft. Ein solcher Rahmen nach dem Stand der Technik ist beispielsweise in der DE 198 14 620 A1 beschrieben.

Aus diesem Grund hat sich insbesondere die Erfüllung der obigen zweiten Anforderung als schwierig erwiesen. Bekannte mit RFID-Transpondern versehene Isolierverglasungseinheiten sind daher nicht ohne Weiteres bei metallischen Rahmenkonstruktionen einzusetzen. Das verringert den potentiellen Einsatzbereich der so gekennzeichneten Verglasungseinheiten und somit die Akzeptanz der entsprechenden Markierungslösungen bei den Herstellern und Anwendern.

Der Erfindung liegt daher die Aufgabe zugrunde, eine verbesserte Verglasungslösung für Rahmenkonstruktionen bereitzustellen, die zumindest zu einem erheblichen Teil aus einem Metall bestehen, und die auch bei solchen Einbausituationen die Erfüllung der o. g. Anforderungen gewährleistet.

Diese Aufgabe wird gemäß einem ersten Aspekt der Erfindung durch eine Fassadenverglasung mit den Merkmalen des Anspruchs 1 gelöst. Gemäß dem weiteren Aspekt der Erfindung wird sie durch eine Isolierverglasungseinheit mit den Merkmalen des Anspruchs 11 gelöst. Zweckmäßige Fortbildungen des Erfindungsgedankens sind Gegenstand der jeweiligen abhängigen Ansprüche.

Die Erfindung schließt den Gedanken ein, den grundsätzlich ungünstigen Abstrahlungs- und Einstrahlungsbedingungen für Funkwellen in einem metallischen Rahmen einer Fassadenverglasung durch eine spezielle Auskopplung Rechnung zu tragen. Sie schließt weiterhin den Gedanken ein, ein Metall-Kopplungselement, welches separat vom Transponder bereitgestellt wird, so im Rahmen anzubringen, dass es eine Auskopplung von über die Antenne des Transponders ausgesandter HF-Strahlung nach außerhalb des Fensters, der Tür oder der Fassadenverglasung und auch von einfallender HF-Strahlung zur Antenne bewirkt.

Die Erfindung ist im Ergebnis von umfangreichen experimentellen Untersuchungen entstanden, die an Verglasungen mit dem oben erwähnten grundsätzlichen Aufbau unternommen wurden, bei dem insbesondere der Abstandshalter ein mit einem Trocknungsmittel gefülltes Hohlprofil ist, das aus Metall besteht oder wenigstens abschnittsweise mit einer Metallfolie oder metallisierten Folie beschichtet ist, und bei dem auf der scheibenäußeren Oberfläche des Abstandhalterprofils ein (ebenfalls umlaufender) Dichtmittelstreifen aufgebracht ist. Was die Anwendungssituation anbelangt, haben die Erfinder insbesondere Untersuchungen an in metallische Rahmen eingebetteten Isolierverglasungseinheiten angestellt, bei denen die Isolierverglasungseinheiten auf metallischen Trägerelementen mit Kunststoffzwischenschichten aufliegen und zwischen den Außenseiten der Glasscheiben und den Innenseiten der benachbarten aufstehenden Rahmenelemente Elastomer-Dichtstreifen angeordnet sind. Bei den Untersuchungen wurden handelsübliche RFID-Transponder eingesetzt, deren Aufbau und Funktionsweise hinlänglich bekannt ist und daher hier nicht weiter beschrieben werden muss. Die bei solchen Transpondersystemen genutzten Funkwellenlängen liegen üblicherweise in den Bereichen 125 kHz bis 132 kHz, 13,45 MHz und 860 MHz bis 960 MHz (selten bei 2,45 GHz und 5,8 GHz) und durchdringen sowohl Holz als auch herkömmliche Kunststoffe, nicht aber Metalle.

Die Erkenntnisse der Erfinder gelten grundsätzlich sowohl für passive als auch für aktive RFID-Transponder.

Im Hinblick auf Metallrahmen, die eine Isolierverglasungseinheit umgreifen, und die aufgrund elementarer physikalischer Gesetzmäßigkeiten und gemäß der darauf basierenden Kenntnis des Fachmanns die HF-Strahlung von randnah angebrachten RFID-Transpondern oder deren Antennen empfindlich stören, wenn nicht völlig unterbinden sollten, ist die vorgeschlagene Lösung überraschend. Sie erbringt den unvorhergesehenen Vorteil, dass ein erfindungsgemäß platzierter RFID-Transponder in einem relativ großen Abstand von ca. 1 m von einem Fenster, einer Tür oder einer Fassadenverglasung, in die die Isolierverglasungseinheit eingebaut ist, noch problemlos und zuverlässig auslesbar ist.

Hinsichtlich der geometrischen Ausführung und der Platzierung des Metall-Kopplungselements, ebenso wie des Transponders selbst, sind die durch die Konstruktion der Fassadenverglasung gesetzten Randbedingungen zu beachten. Hier kann der Fachmann durch einfache Versuche Ausführungen und Positionen mit vorteilhaften Abstrahl- und Empfangseigenschaften finden. Die nachfolgend genannten Ausführungsbeispiele und -aspekte stellen daher primär Empfehlungen für den Fachmann dar, ohne die Ausführungsmöglichkeiten der Erfindung zu beschränken.

In einer vorteilhaften Ausführung können die Transponder und das benachbart hierzu platzierte Metall-Kopplungselement des oder mindestens eines Transponders an oder nahe einer Ecke der Isolierverglasungseinheit angeordnet werden.

Im Hinblick darauf, dass mit Transpondern versehene Isolierverglasungseinheiten teilweise in mehreren möglichen Lagen in eine Umfassungs-Konstruktion eingebaut werden können und die Identifizierung im eingebauten Zustand schnell und aus größeren Entfernungen möglich sein soll, kann in einer Ausgestaltung dieser Ausführung an oder nahe zu mehreren Ecken der Isolierverglasungseinheit ein Transponder mit zugehöriger Antenne und benachbart hierzu platziertem Metall-Kopplungselement angeordnet sein. Das Lesegerät kann dann an eine beliebige Ecke des Rahmens gehalten werden und "findet" schnell einen Transponder. Dies erhöht die Akzeptanz bei den Nutzern, so dass der etwas höhere Herstellungsaufwand ggf. in Kauf genommen werden kann.

Weiterhin ist eine Ausführung bedeutsam, bei der mindestens zwei Metall-Kopplungselemente in einem Rahmen derart angeordnet sind, dass die Isolierverglasungseinheit auf ihnen ruht, womit sie zugleich als Isolierverglasungs-Tragelemente dienen. Insbesondere hierbei kann ein Komposit-Aufbau der Trageelemente aus einem Kunststoffteil und einem Metallteil vorteilhaft sein.

Hinsichtlich der Ausführung der Kopplung sind Konfigurationen vorteilhaft, bei denen das Metall-Kopplungselement streifenförmig oder als langgestrecktes L-Profil ausgebildet ist. Diese Formen lassen sich leicht in die Isolierverglasungseinheit einbetten oder getrennt hiervon im Rahmen einer Fassadenkonstruktion platzieren, und sie sind überdies einfach und kostengünstig herstellbar. Wichtig ist dabei die relative Position des Metall-Kopplungselements in Bezug auf den RFID-Transponder der Isolierverglasungseinheit, wie im Folgenden ausgeführt wird, da dadurch eine besonders gute elektromagnetische Kopplung des Kopplungselements an das RFID-Signal erfolgt.

Elektromagnetisch gekoppelt bedeutet hier, dass das Kopplungselement und der RFID-Transponder durch ein elektromagnetisches Feld gekoppelt sind, d.h. sowohl kapazitiv als auch induktiv verbunden sind und bevorzugt nicht galvanisch.

Hinsichtlich des Materials ist bevorzugt, dass das Metall-Kopplungselement aus Kupfer oder Aluminium oder einer Aluminiumlegierung oder Edelstahl gefertigt ist. Es versteht sich, dass prinzipiell jedes Metall mit ausreichender Stabilität und elektrischer Leitfähigkeit verwendet werden kann. Auch zusammengesetzte Elemente, z.B. aus einem Metallträger und einer Kunststoff-Auflage oder - Beschichtung, sind vorteilhaft, insbesondere im Hinblick auf niedrige Kosten und auf die Vermeidung von Beschädigungen bei der Verglasungs-Montage.

Die Abmessungen des Metall-Kopplungselements sind insbesondere von der Betriebsfrequenz des RFID-Transponders abhängig.

Für RFID-Transponder im UHF-Bereich, insbesondere für RFID-Transponder bei 865-869 MHz (u.a. europäische Frequenzen) bzw. 902-928 MHz (USamerikanische und andere Frequenzbänder), konnten besonders gute Ergebnisse für Kopplungselemente mit einer Länge L von mehr als 7 cm, bevorzugt von mehr als 10 cm und insbesondere von mehr als 14 cm erzielt werde. Die maximale Länge war dabei weniger kritisch. So führten maximale Längen von 30 cm noch zu guten Ergebnissen und guten Lesereichweiten.

In einer alternativen vorteilhaften Ausgestaltung einer erfindungsgemäßen Isolierverglasungseinheit weist das Metall-Kopplungselement eine Länge L parallel zur Dipol-Antenne des RFID-Transponders von 7 cm bis 40 cm, bevorzugt von 10 cm bis 20 cm und insbesondere von 12 cm bis 16 cm auf.

Die Breite des Kopplungselements hängt im Wesentlichen von der Breite der Stirnseite der Isolierverglasungseinheit und dem jeweiligen Abstand zur Einrastung im Rahmen ab. Typische Breiten sind von 2 cm bis 10 cm und bevorzugt von 3 cm bis 5 cm.

Die konkrete Dimensionierung wird der Fachmann in Anbetracht der Abmessungen der Isolierverglasungseinheit einerseits und des Umfassungsrahmens andererseits, insbesondere unter Beachtung der Weite des Rahmens und der Überdeckung des Scheiben-Kantenbereiches durch die aufstehende Rahmenblende, vornehmen.

Bei Untersuchungen der Erfinder hat sich herausgestellt, dass die Verstärkung vorteilhafterweise mit einem Abstand im Bereich zwischen 1 mm und 10 mm, insbesondere zwischen 3 mm und 8 mm, zum Transponder platziert ist. Unter besonderen Bedingungen können aber auch größere Abstände immer noch deutlich vergrößerte Auslesedistanzen des Transponders ergeben.

Des Weiteren muss das Metall-Kopplungselement galvanischen oder zumindest kapazitiven Kontakt zum Fassadenrahmen aufweisen. Dazu ist das Metall-Kopplungselement bevorzugt fest in ein Halteelement des Rahmens eingerastet oder eingeklemmt. Vorteilhaft ist es, wenn das Metall-Kopplungselement das Halteelement über seine gesamte Länge berührt.

Hinsichtlich der relativen Position des Metall-Kopplungselements zum RFID-Transponder, lässt sich aus Untersuchungen der Erfinder ableiten, dass ein gewisser Versatz zwischen dem Transponder, der üblicherweise einen ähnlich langgestreckten Aufbau wie das vorgeschlagene Metall-Kopplungselement aufweist, und dem letzteren in Längsrichtung vorteilhaft für die gewünschte Vergrößerung des Ausleseabstandes ist. Die größte Verstärkungswirkung lässt sich erzielen, wenn die Kante des Kopplungselementes so angeordnet ist, dass sie unterhalb der Mitte des Transponders angeordnet ist, wobei die Mitte des Transponders durch die Mitte seiner Dipol-Antenne gekennzeichnet ist.

Optimal ist ein Versatz von V = 0. Dennoch konnten für Abweichungen davon noch gute Ergebnisse und Lesereichweiten erzielt werden. In einer vorteilhaften Ausgestaltung der Erfindung beträgt der Versatz V bei einer Betriebsfrequenz des RFID-Transponders im UHF-Bereich von -30 mm bis +30 mm, bevorzugt von - 20 mm bis +20 mm und insbesondere von -10 mm bis +10 mm.

Im Kontext der Erfindung ist es demnach wichtig, dass das Metall-Kopplungselement an einer definierten Stelle im Rahmen relativ zum Transponder platziert ist, um seine Wirkung bezüglich des gleichfalls an einer festen Position an der Isolierverglasungseinheit positionierten Transponders erfüllen zu können.

Des Weiteren ist die Ausführung nicht auf Metall-Kopplungselemente beschränkt, bei denen das Metall-Kopplungselement im (in Montagelage) unteren Rahmenabschnitt angebracht ist, wo sie zugleich als Tragelement der Isolierverglasungseinheit wirken kann. Vielmehr kann das Metall-Kopplungselemente auch im oberen oder mindestens einem seitlichen Rahmenabschnitt platziert sein.

Für die Platzierung des Transponders in der Isolierverglasungseinheit gibt es verschiedene Möglichkeiten, aus denen der Fachmann unter Beachtung der speziellen Montagetechnologie der Isolierverglasungseinheit und auch im Hinblick auf die konkrete Fassaden- oder Fensterkonstruktion eine geeignete auswählen kann. In bestimmten Ausführungen ist der Transponder, dem ein Metall-Kopplungselement zugeordnet ist, auf der inneren oder äußeren Oberfläche des Abstandshalterprofils platziert. In einer alternativen Ausführung ist der Transponder, dem ein Metall-Kopplungselement zugeordnet ist, auf einer äußeren Oberfläche einer der Glasscheiben an oder nahe deren Begrenzungskante platziert.

Ein besonderer Vorteil ist die Verwendung eines Metall-Kopplungselements in Form eines in der Fassadenkonstruktion üblichen Isolierverglasungs-Tragelements, welches durch geeignete Positionierung relativ zu einem RFID-Transponder dessen Signale in einen benachbarten Metallkörper (z.B. die Haltevorrichtung) aus- und einkoppelt und so die Lesereichweite des RFID-Transponders vervielfacht.

Das erfindungsgemäße Konzept ist nicht auf Fassadenverglasungen beschränkt, sondern kann auch in Fenstern, Türen oder Innenbereichsabtrennungen mit gleichem oder ähnlichem Aufbau verwendet werden.

Vorteile und Zweckmäßigkeiten der Erfindung ergeben sich im Übrigen aus der nachfolgenden Beschreibung von Ausführungsbeispielen und -aspekten der Erfindung anhand der Figur. Von diesen zeigen:
- Figur. 1: eine schematische Darstellung (Querschnittsansicht) eines Kantenbereichs einer erfindungsgemäßen Fassadenverglasung,
- Figur 2: eine schematische Darstellung (Draufsicht) auf den Kantenbereich auf Figur 1 und
- Figur 3: ein Flussdiagramm eines erfindungsgemäßen Verfahrens.

In den Figuren sowie der nachfolgenden Beschreibung sind die Isolierverglasungseinheit wie auch die Fassadenverglasung sowie die einzelnen Komponenten jeweils, unabhängig davon, dass sich die konkreten Ausführungen unterscheiden, mit den gleichen oder ähnlichen Bezugsziffern bezeichnet.

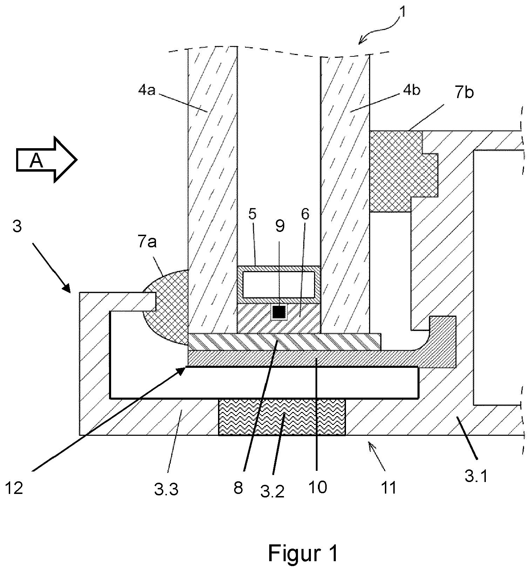

Figur 1 zeigt in einer Querschnittsansicht einen Abschnitt einer Fassadenverglasung 11, bei der eine Isolierverglasungseinheit 1 in ein Fassadenrahmenprofil 3 eingesetzt ist.

Die Isolierverglasungseinheit 1 umfasst bei dieser Ausführung zwei Glasscheiben 4a und 4b, die durch ein nahe der Stirnfläche der Isolierverglasungseinheit 1 zwischen die Glasscheiben 4a, 4b gesetztes Abstandshalterprofil 5 in einem vorbestimmten Abstand gehalten sind. Das Abstandshalterprofil 5 ist üblicherweise hohl und mit einem (nicht gezeigten) Trocknungsmittel befüllt, welches über innenseitige kleine Öffnungen (ebenfalls nicht gezeigt) etwaige in den Glaszwischenraum eingedrungene Feuchtigkeit an sich bindet. Der Glaszwischenraum zwischen den Glasscheiben 4a und 4b ist evakuiert oder mit einem Edelgas, etwa Argon, gefüllt.

Im Randbereich der Isolierverglasungseinheit 1, zwischen den Glasschreiben 4a und 4b und außerhalb des Abstandshalterprofils 5, ist eine Elastomer-Versiegelung (Dichtprofil) 6 eingebracht. Diese ist hier vereinfacht einteilig dargestellt. In der Praxis umfasst sie üblicherweise zwei Komponenten, von denen eine zwischen Abstandshalter und Glas abdichtet und die andere die Isolierverglasungseinheit zusätzlich stabilisiert.

Die Isolierverglasungseinheit 1 enthält hier einen RFID-Transponder 9, der beispielsweise auf der Außenseite des Abstandshalterprofils 5 angebracht ist. Es versteht sich, dass der RFID-Transponder auch an den Glasscheiben 4a, 4b oder inmitten des Dichtprofils 6 angeordnet sein kann.

Der Rahmen 3 der Fassadenvorrichtung besteht aus einer Haltevorrichtung 3.1, die beispielsweise fest an einer nicht dargestellten Gebäudewand angeordnet ist; des Weiteren einer Rahmenblende 3.3, die über ein polymeres und elektrisch isolierende Verbindeelement 3.2 an der Haltevorrichtung 3.1 befestigt ist.

Die Isolierverglasungseinheit 1 ruht auf mindestens einem Isolierverglasungs-Tragelement 12. Das Isolierverglasungs-Tragelement 12 enthält ein Metall-Kopplungselement 10, das die Glasscheiben 4a, 4b unterstützt. Zwischen dem Metall-Kopplungselement 10 und den Glasscheiben 4a, 4b ist eine Kunststoffzwischenschicht 8 angeordnet, die eine Beschädigung der Glasscheiben 4a, 4b durch direkten Kontakt mit dem Metall des Kopplungselements 10 verhindert.

Das Metall-Kopplungselement 10 hat einen annähernd L-förmigem Querschnitt und ist auf einer Seite in die Haltevorrichtung 3.1 eingerastet und damit mit der dem Metall der Haltevorrichtung 3.1 elektrisch leitend verbunden.

Des Weiteren sind zwischen dem Rahmen 3 und den Glasscheiben 4a, 4b zwei Elastomerprofile 7a, 7b angeordnet, die die Glasscheiben 4a, 4b im Rahmen 3 festklemmen.

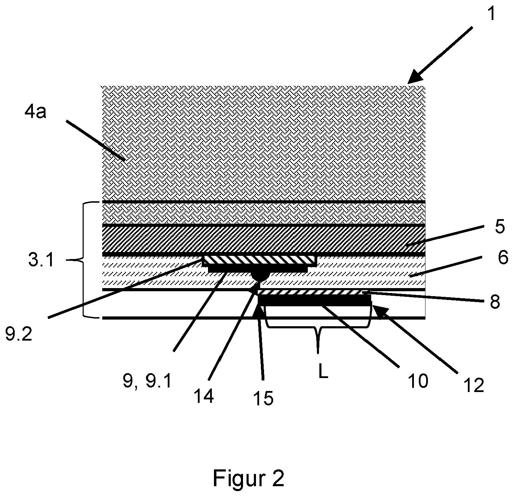

Figur 2 zeigt eine vereinfachte Darstellung, die die Position des Metall-Kopplungselements 10 relative zum RFID-Transponder 9 wiedergibt. Figur 2 zeigt dabei eine Draufsicht in Blickrichtung des Pfeils A auf bzw. durch die erste Glasscheibe 4a.

Der RFID-Transponder 9 enthält in diesem Ausführungsbeispiel eine Dipol-Antenne 9.1, die auf einem dielektrischen Trägerelement 9.2 angeordnet ist. Derartige RFID-Transponders 9 sind kommerziell erhältlich und sowohl auf elektrisch isolierenden Unterlagen, als auch elektrisch leitfähigen Unterlagen (beispielsweise bei einer metallisierten Isolationsfolie auf dem Abstandshalter 5) einsetzbar.

Bei dieser Ausführung ist das Isolierverglasungs-Tragelement 12 mit dem Metall-Kopplungselement 10 derart platziert, dass eine Kante 15 des Metall-Kopplungselements 10 in etwa unterhalb der Mitte 14 der Dipol-Antenne 9.1 des RFID-Transponders 9 angeordnet ist.

Das Metall-Kopplungselement ist daher unter genau einem Antennenpol der Dipol-Antenne 9.1 und aufgrund des geringen Abstands mit diesem kapazitiv gekoppelt. Durch den mechanischen Kontakt des Metall-Kopplungselements 10 mit der metallischen Haltevorrichtung 3.1 erfolgt eine beispielsweise galvanische Ankopplung. Es versteht sich, dass bei den üblichen Betriebsfrequenzen von RFID-Transpondern auch eine kapazitive Kopplung des Metall-Kopplungselements 10 an die Haltevorrichtung 3.1 genügen würde.

All dies führt zu einer verbesserten Einkopplung und Auskopplung des RFID-Signals und zu einer deutlich größeren Auslesereichweite des RFID-Signals außerhalb der Verglasung. Dies war für die Erfinder unerwartet und überraschend.

Eine genaue Positionierung der Kante 15 unterhalb der Mitte 14 der Dipol-Antenne 9.1 bewirkt die größten Lesereichweiten von bis zu 2 m Abstand (gemessen mit einen RFID-Handheld-Auslesegerät). Dennoch ergibt ein Versatz zwischen der Kante 15 und der Mitte 14 von beispielsweise bis zu 30 mm eine deutliche Verbesserung der Lesereichweiten.

Die Länge L des Metall-Kopplungselements 10, also die Dimension parallel zur Scheibenkante bzw. zur Erstreckungsrichtung der Dipol-Antenne 9.1 des RFID-Transponders 9 beträgt für einen RFID-Transponder im UHF-Bereich mit 866,6 MHz Betriebsfrequenz beispielsweise 15 cm.

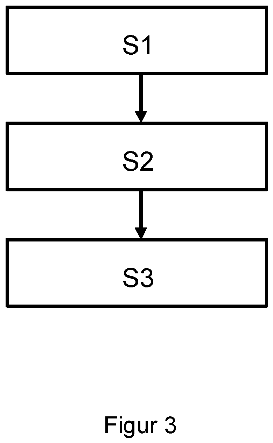

Figur 3 zweigt die Verfahrensschritte eines erfindungsgemäßen Verfahrens zur Herstellung einer erfindungsgemäßen Fassadenverglasung 11, wobei
S1) eine metallische Haltevorrichtung 3.1 bereitgestellt und insbesondere an einer Fassade angeordnet wird,
S2) ein Isolierverglasungs-Tragelement 12 mit einem Metall-Kopplungselement 10 in die Haltevorrichtung 3.1 eingerastet wird und eine Isolierverglasungseinheit 1 auf das Isolierverglasungs-Tragelement 12 aufgelegt wird,
S3) eine metallische Rahmenblende 3.3 über ein elektrisch isolierendes und bevorzugt polymeres Verbindeelement 3.2 mit der Haltevorrichtung 3.3 verbunden wird und dadurch die Isolierverglasungseinheit 1 in der Fassadenverglasung 11 befestigt wird.

Eine weitere Ausführungsform umfasst ein erfindungsgemäßes Verfahren, wobei das Metall-Kopplungselement 10 in dem Rahmen 3 in einer mit dem Transponder 9 nur teilweise überlappenden Lage platziert wird.

Die Ausführung der Erfindung ist nicht auf das oben beschriebene Beispiel und hervorgehobenen Ausführungsaspekte beschränkt, sondern auch in einer Vielzahl von Abwandlungen möglich, die sich für den Fachmann aus den anhängenden Ansprüchen ergeben.

### Bezugszeichenliste

- 1: Isolierverglasungseinheit
- 3: Rahmen, Fassadenrahmenprofil
- 3.1: Haltevorrichtung
- 3.2: Verbindeelement
- 3.3: Rahmenblende
- 4a, 4b: Glasscheiben
- 5: Abstandshalterprofil
- 6: Dichtprofil der Isolierverglasungseinheit
- 7a, 7b: Elastomerprofil
- 8: Kunststoffzwischenschicht
- 9: RFID-Transponder
- 9.1: Dipol-Antenne
- 9.2: Trägerelement
- 10: Metall-Kopplungselement
- 11: Fassadenverglasung
- 12: Isolierverglasungs-Tragelement
- 14: Mitte des RFID-Transponders 9
- 15: Kante des Metall-Kopplungselements 12
- Pfeil A: Blickrichtung
- L: Länge des Metall-Kopplungselements 12

## Patentansprüche

1. Fassadenverglasung (11) mit einem metallischen Rahmen (3) und einer in den Rahmen eingesetzten Isolierverglasungseinheit (1), die mindestens zwei Glasscheiben (4a, 4b) und ein zwischen diesen nahe deren Kanten umlaufendes Abstandshalter- und Dichtprofil (5, 6) aufweist,
wobei an der Isolierverglasungseinheit mindestens ein RFID-Transponder (9) als Identifikationselement angebracht ist und wobei der Rahmen (3) die Kanten der Isolierverglasungseinheit umgreift und zugleich den oder die Transponder (9) in Durchsichtsrichtung (Pfeil A) durch die Glasscheiben (4a, 4b) überdeckt,
wobei in den Rahmen (3) benachbart zu dem Transponder (9) mindestens ein separates Metall-Kopplungselement (10; 10'; 10") zur Aus- und Einkopplung von über den Transponder (9) nach außerhalb der Fassadenverglasung (11) ausgesandter und von außen empfangener HF-Strahlung eingefügt ist und wobei das Metall-Kopplungselement (10) in dem Rahmen (3) in einer mit dem Transponder (9) nur teilweise überlappenden Lage platziert ist.

2. Fassadenverglasung (11) nach Anspruch 1, wobei das Metall-Verstärkungselement (10) und der oder mindestens ein Transponder (9) an oder nahe einer Ecke des Rahmens bzw. der Isolierverglasungseinheit (1) angeordnet sind.

3. Fassadenverglasung (11) nach Anspruch 1 oder 2, wobei mindestens zwei Metall-Kopplungselemente (10) im Rahmen (3) derart angeordnet sind, dass die Isolierverglasungseinheit (1) auf ihnen ruht, womit sie zugleich als Isolierverglasungs-Tragelemente (12) dienen.

4. Fassadenverglasung (11) nach einem der vorangehenden Ansprüche, wobei der Rahmen (3) ein metallisches Halteelement (3.1), eine metallische Rahmenblende (3.3) und ein das Halteelement (3.1) mit der Rahmenblende (3.3) verbindende elektrisch isolierende und bevorzugt polymere Verbindeelement (3.2) und das Metall-Kopplungselement (10) am Halteelement (3.1) befestigt ist.

5. Fassadenverglasung (11) nach einem der vorangehenden Ansprüche, wobei das Metall-Kopplungselement (10) streifenförmig oder als langgestrecktes L-Profil ausgebildet ist.

6. Fassadenverglasung (11) nach einem der vorangehenden Ansprüche, wobei das Metall-Kopplungselement (10') eine Länge von größer oder gleich 7 cm, bevorzugt von 7 cm bis 40 cm, besonders bevorzugt von 10 cm bis 20 cm und insbesondere 12 cm bis 16 cm hat.

7. Fassadenverglasung (11) nach einem der vorangehenden Ansprüche, wobei das Metall-Kopplungselement (10) aus Kupfer, Aluminium oder einer Aluminiumlegierung oder Edelstahl gefertigt ist.

8. Fassadenverglasung (11) nach einem der vorangehenden Ansprüche, wobei das Metall-Kopplungselement (10) mit einem Abstand im Bereich von 1 mm bis 10 mm, insbesondere von 3 mm bis 8 mm, zu dem benachbarten Transponder (9) platziert ist.

9. Fassadenverglasung (11) nach einem der vorangehenden Ansprüche oder eines Fensters oder einer Tür, wobei das Metall-Kopplungselement (10) zusammen mit einem stoßdämpfenden nichtmetallischen Element, insbesondere einem elastischen Kunststoffelement (8), in den Rahmen (3) eingesetzt ist oder eine elastische Deckschickt aufweist.

10. Fassadenverglasung (11) nach einem der vorangehenden Ansprüche, wobei das Metall-Kopplungselement (10) in eine metallische Haltevorrichtung (3.1) des Rahmens (3) eingeklebt oder kraftschlüssig eingefügt ist und bevorzugt galvanisch oder kapazitiv mit der Haltevorrichtung (3.1) verbunden ist.

11. Fassadenverglasung (11) nach einem der vorangehenden Ansprüche, wobei das Metall-Kopplungselement (10) in den Rahmen (3) in einer durch eine Montagevorschrift vorbestimmten Position eingefügt ist.

12. Fassadenverglasung (11) nach einem der vorangehenden Ansprüche, wobei eine Kante (15) des Metall-Kopplungselements (10) mit einem Versatz von maximal 30 mm, bevorzugt maximal 20 mm und insbesondere maximal 10 mm zur Mitte (15) einer Dipol-Antenne (9.1) des RFID-Transponders (9) angeordnet ist.

13. Verfahrens zur Herstellung einer Fassadenverglasung (11) nach einem der vorangehenden Ansprüche, wobei
S1) eine metallische Haltevorrichtung (3.1) bereitgestellt und insbesondere an einer Fassade angeordnet wird,
S2) ein Isolierverglasungs-Tragelement (12) mit einem Metall-Kopplungselement (10) in die Haltevorrichtung (3.1) eingerastet wird und eine Isolierverglasungseinheit (1) auf das Isolierverglasungs-Tragelement (12) aufgelegt wird,
S3) eine Rahmenblende (3.3) über ein elektrisch isolierendes und bevorzugt polymeres Verbindeelement (3.2) mit der Haltevorrichtung (3.3) verbunden wird und dadurch die Isolierverglasungseinheit (1) in der Fassadenverglasung (11) befestigt wird.

14. Verfahrens zur Herstellung einer Fassadenverglasung (11) nach Anspruch 13, wobei das Metall-Kopplungselement (10) in den Rahmen (3) in einer mit dem Transponder (9) nur teilweise überlappenden Lage platziert wird.

15. Verwendung einer Fassadenverglasung (11) nach einem der Ansprüche 1 bis 12 als Fenster, Tür oder Innenbereichsabtrennung.

## Claims

1. Façade glazing (11) with a metallic frame (3) and an insulating glazing unit (1) inserted into the frame, which unit has at least two glass panes (4a, 4b) and a spacer and sealing profile (5, 6) extending circumferentially therebetween close to their edges, wherein at least one RFID transponder (9) is attached to the insulating glazing unit as an identification element and wherein the frame (3) engages around the edges of the insulating glazing unit and, at the same time, covers the transponder(s) (9) in the through-vision direction (arrow A) through the glass panes (4a, 4b),
wherein at least one separate metal coupling element (10; 10'; 10") is inserted into the frame (3) adjacent the transponder (9) for coupling out and coupling in HF radiation transmitted via the transponder (9) to the outside of the façade glazing (11) and received from the outside, and wherein the metal coupling element (10) is placed in the frame (3) in a position only partially overlapping with the transponder (9).

2. Façade glazing (11) according to claim 1, wherein the metal reinforcing element (10) and the or at least one transponder ((9) are arranged at or near a corner of the frame or of the insulating glazing unit (1).

3. Façade glazing (11) according to claim 1 or 2, wherein at least two metal coupling elements (10) are arranged in the frame (3) such that the insulating glazing unit (1) rests on them, as a result of which they serve at the same time as insulating glazing support elements (12).

4. Façade glazing (11) according to one of the preceding claims, wherein the frame (3), [comprising] a metallic holding element (3.1), a metallic frame cover (3.3), and a preferably polymeric connecting element (3.2) that connects the holding element (3.1) to the frame cover (3.3) in an electrically insulating manner, and the metal coupling element (10), is secured to the holding element (3.1).

5. Façade glazing (11) according to one of the preceding claims, wherein the metal coupling element (10) is designed strip-shaped or as an elongated L-profile.

6. Façade glazing (11) according to one of the preceding claims, wherein the metal coupling element (10') has a length greater than or equal to 7 cm, preferably of 7 cm to 40 cm, particularly preferably of 10 cm to 20 cm, and in particular 12 cm to 16 cm.

7. Façade glazing (11) according to one of the preceding claims, wherein the metal coupling element (10) is made of copper, aluminum or an aluminum alloy, or stainless steel.

8. Façade glazing (11) according to one of the preceding claims, wherein the metal coupling element (10) is placed at a distance in the range from 1 mm to 10 mm, in particular from 3 mm to 8 mm, from the adjacent transponder (9).

9. Façade glazing (11) according to one of the preceding claims or of a window or of a door, wherein the metal coupling element (10) is inserted into the frame (3) together with a shock-absorbing nonmetallic element, in particular an elastic plastic element (8), or has an elastic covering layer.

10. Façade glazing (11) according to one of the preceding claims, wherein the metal coupling element (10) is glued or force-fittingly inserted into a metallic holding device (3.1) of the frame (3) and is preferably galvanically or capacitively connected to the holding device (3.1).

11. Façade glazing (11) according to one of the preceding claims, wherein the metal coupling element (10) is inserted into the frame (3) in a position predetermined by an assembly specification.

12. Façade glazing (11) according to one of the preceding claims, wherein one edge (15) of the metal coupling element (10) is arranged with an offset of at most 30 mm, preferably at most 20 mm, and in particular at most 10 mm from the center (15) of a dipole antenna (9.1) of the RFID transponder (9).

13. Method for producing a façade glazing (11) according to one of the preceding claims, wherein
S1) a metallic holding device (3.1) is provided and arranged in particular on a façade,
S2) an insulating glazing support element (12) with a metal coupling element (10) is snapped into the holding device (3.1) and an insulating glazing unit (1) is placed on the insulating glazing support element (12),
S3) a frame cover (3.3) is connected to the holding device (3.3) via an electrically insulating and preferably polymeric connecting element (3.2) and the insulating glazing unit (1) is thereby secured in the façade glazing (11).

14. Method for producing a façade glazing (11) according to claim 13, wherein the metal coupling element (10) is placed in the frame (3) in a position only partially overlapping with the transponder (9).

15. Use of a façade glazing (11) according to one of claims 1 through 12 as a window, door, or interior partition.

## Revendications

1. - Vitrage de façade (11) comportant un cadre métallique (3) et un ensemble vitrage isolant (1) qui est introduit dans le cadre et qui présente au moins deux vitres (4a, 4b) et un profilé d'espacement et d'étanchéité (5, 6) s'étendant de façon périphérique entre celles-ci près de leurs bords,
au moins un transpondeur RFID (9) en tant qu'élément d'identification étant fixé sur l'ensemble vitrage isolant et le cadre (3) entourant les bords de l'ensemble vitrage isolant et en même temps recouvrant le ou les transpondeurs (9) dans la direction de vision (flèche A) à travers les vitres (4a, 4b), au moins un élément de couplage métallique séparé (10 ; 10' ; 10") étant inséré dans le cadre (3) au voisinage du transpondeur (9) pour le découplage et le couplage du rayonnement HF émis par l'intermédiaire du transpondeur (9) vers l'extérieur du vitrage de façade (11) et reçu de l'extérieur, et l'élément de couplage métallique (10) étant placé dans le cadre (3) dans une position ne chevauchant que partiellement le transpondeur (9).

2. - Vitrage de façade (11) selon la revendication 1, dans lequel l'élément de renforcement métallique (10) et le ou au moins un transpondeur (9) sont disposés à ou près d'un coin du cadre ou de l'ensemble vitrage isolant (1).

3. - Vitrage de façade (11) selon l'une des revendications 1 ou 2, dans lequel au moins deux éléments de couplage métalliques (10) sont disposés dans le cadre (3) de telle sorte que l'ensemble vitrage isolant (1) repose sur eux, ce qui leur permet de servir en même temps d'éléments de support de vitrage isolant (12).

4. - Vitrage de façade (11) selon l'une des revendications précédentes, dans lequel le cadre (3) comporte un élément de maintien métallique (3.1), un couvercle de cadre métallique (3.2) et un élément de liaison (3.2) électriquement isolant et de préférence polymère, reliant l'élément de maintien (3.1) au couvercle de cadre (3.3), et l'élément de couplage métallique (10) est fixé à l'élément de maintien (3.1).

5. - Vitrage de façade (11) selon l'une des revendications précédentes, dans lequel l'élément de couplage métallique (10) est réalisé en forme de bande ou en tant que profilé en L allongé.

6. - Vitrage de façade (11) selon l'une des revendications précédentes, dans lequel l'élément de couplage métallique (10') a une longueur supérieure ou égale à 7 cm, de préférence de 7 cm à 40 cm, de manière particulièrement préférée de 10 cm à 20 cm et en particulier de 12 cm à 16 cm.

7. - Vitrage de façade (11) selon l'une des revendications précédentes, dans lequel l'élément de couplage métallique (10) est en cuivre, en aluminium ou alliage d'aluminium ou en acier inoxydable.

8. - Vitrage de façade (11) selon l'une des revendications précédentes, dans lequel l'élément de couplage métallique (10) est placé à une distance dans la plage de 1 mm à 10 mm, en particulier de 3 mm à 8 mm, du transpondeur voisin (9).

9. - Vitrage de façade (11) selon l'une des revendications précédentes ou d'une fenêtre ou d'une porte, dans lequel l'élément de couplage métallique (10) est introduit dans le cadre (3) conjointement avec un élément non métallique absorbant les chocs, en particulier un élément en matière plastique élastique (8), ou présente une couche de recouvrement élastique.

10. - Vitrage de façade (11) selon l'une des revendications précédentes, dans lequel l'élément de couplage métallique (10) est collé ou inséré à force dans un dispositif de maintien métallique (3.1) du cadre (3) et est de préférence relié au dispositif de maintien (3.1) galvaniquement ou capacitivement.

11. - Vitrage de façade (11) selon l'une des revendications précédentes, dans lequel l'élément de couplage métallique (10) est inséré dans le cadre (3) dans une position prédéterminée par une instruction d'installation.

12. - Vitrage de façade (11) selon l'une des revendications précédentes, dans lequel un bord (15) de l'élément de couplage métallique (10) est disposé avec un décalage de 30 mm maximum, de préférence de 20 mm maximum et en particulier de 10 mm maximum, par rapport au centre (15) d'une antenne dipôle (9.1) du transpondeur RFID (9).

13. - Procédé de fabrication d'un vitrage de façade (11) selon l'une des revendications précédentes, dans lequel
S1) un dispositif de maintien métallique (3.1) est fourni et disposé en particulier sur une façade ;
S2) un élément de support de vitrage isolant (12) avec un élément de couplage métallique (10) est encliqueté dans le dispositif de maintien (3.1) et un ensemble vitrage isolant (1) est appliqué sur l'élément de support de vitrage isolant (12) ;
S3) un couvercle de cadre (3.3) est relié au dispositif de maintien (3.3) par l'intermédiaire d'un élément de liaison (3.2) électriquement isolant et de préférence polymère, et l'ensemble vitrage isolant (1) est par là fixé dans le vitrage de façade (11).

14. - Procédé de fabrication d'un vitrage de façade (11) selon la revendication 13, dans lequel l'élément de couplage métallique (10) est placé dans le cadre (3) dans une position ne chevauchant que partiellement le transpondeur (9).

15. - Utilisation d'un vitrage de façade (11) selon l'une des revendications 1 à 12 comme fenêtre, porte ou séparation de zone intérieure.
